# EUROPEAN PATENT APPLICATION

(11) **EP 4 755 693 A1**
(43) Date of publication of application: **10.06.2026**
(21) Application number: 25212675.0
(22) Date of filing: 31.10.2025
(51) Int. Cl.: B60L 3/00, B60L 3/04, B60L 15/12, H01H 47/18

(54) **RELAY DELAY TURN-OFF CIRCUIT AND RELAY CONTROL METHOD**

(30) Priority: 06.12.2024 CN 202411794213
(71) Applicant: Zhejiang Leapenergy Technology Co., Ltd., Hangzhou, Zhejiang 310000 (CN); Zhejiang Leapmotor Technology Co., Ltd, Hangzhou, Zhejiang 310051 (CN)
(72) Inventor: LIU, Zheng, Hangzhou, 310000 (CN); ZAHNG, Jun, Hangzhou, 310000 (CN); GUO, Yingjie, Hangzhou, 310000 (CN); XU, Liangdu, Hangzhou, 310000 (CN); WANG, Pengfei, Hangzhou, 310000 (CN); CHEN, Yuanjie, Hangzhou, 310000 (CN)
(74) Representative: De Arpe Tejero, Manuel

(57) **Abstract**

A relay delay turn-off circuit and a relay control method. The relay delay turn-off circuit includes a power control chip (1) outputting a first safety signal, a micro-control chip (2) outputting a second safety signal and a control group signal, a delay module (3), and a relay driving module (4). The delay module (3) receives the first safety signal, the second safety signal, and the control group signal, and outputs a first enable signal (EN1), a second enable signal (EN2), and a safety status signal. When the micro-control chip (2) resets, the first enable signal (EN1) delays a turn-off action of the relay driving module (4) until after a preset time, which is greater than a reset time. The power control chip (1) and the micro-control chip (2) output the first safety signal and the second safety signal according to their respective safety states.

## Description

### TECHNICAL FIELD

The present disclosure relates to the field of relays, and in particular to a relay delay turn-off circuit and a relay control method.

### BACKGROUND

A vehicle-mounted battery is a main power source in a new energy vehicle. However, directly using the vehicle-mounted battery to power a load may cause the battery to be overcharged or over-discharged, which may result in damage to the load. In order to avoid such situations, a relay is needed to connect the vehicle-mounted battery and the load equipment, and a battery management system (BMS) is used to monitor battery cells in real time. An input circuit of the relay is controlled according to real-time status of the battery cells, thereby realizing on-off management of a high-voltage circuit of the vehicle-mounted battery, and at the same time realizing isolation of the high-voltage circuit and a low-voltage circuit.

With the development of new energy vehicle technology, load scenarios of vehicle batteries are becoming more and more complex. When the BMS is affected by interference from the external environment, cosmic rays, and strong electromagnetic fields, or when there is an internal fault in a controller, it is necessary to perform a reset operation. At this time, the relay is controlled to disconnect, causing the vehicle to lose power and stall. Therefore, it is necessary to delay the turn-off of the relay for a certain period of time when resetting the BMS.

At present, a relay delay turn-off circuit in the related art only meets the requirements of ISO-16750 for BMS anti-interference capability, and the delay may not meet the time required for resetting the actual BMS core control chip. In addition, the relay delay turn-off circuit in the related art has a single structure, and only manages the on-off of the relay through a single control chip enable signal, without feedback functions and logic-based anti-false-triggering functions. Therefore, a new relay delay turn-off circuit is urgently needed.

### SUMMARY

The embodiments of the present disclosure provide a relay delay turn-off circuit and a relay control method to improve the control logic of the relay delay turn-off circuit.

In order to solve the above technical problems, the embodiments of the present disclosure disclose technical solutions as follows.

On the one hand, a relay delay turn-off circuit is provided, including a power control chip, a micro-control chip, a delay module, and a relay driving module. The power control chip is configured to output a first safety signal. The micro-control chip is configured to output a second safety signal and a control group signal. The delay module is configured to receive the first safety signal, the second safety signal, and the control group signal, and to output a first enable signal, a second enable signal, and a safety status signal according to the first safety signal, the second safety signal, and the control group signal. The relay driving module is configured to receive the first enable signal, the second enable signal, and the safety status signal, and to drive a relay according to valid states of the first enable signal, the second enable signal, and the safety status signal. In a case where the micro-control chip is reset, the delay module is configured to delay a turn-off action of the relay driving module until after a preset time via the first enable signal, and the preset time is greater than a reset time of the micro-control chip. In a case where the power control chip faults or is abnormal, the first safety signal is set to zero, and the delay module is configured to output the first enable signal set to zero according to the first safety signal set to zero. In a case where the micro-control chip faults or is abnormal, the second safety signal is set to zero, and the delay module is configured to output the safety status signal set to zero according to the second safety signal set to zero.

On the other hand, a relay control method is provided, including: S1, powering on and starting a relay delay turn-off circuit, a power control chip and a micro-control chip running a fault self-check program, and determining valid states of a first safety signal and a second safety signal according to fault states of the power control chip and the micro-control chip respectively; S2, performing, in response to the first safety signal being in an invalid state and/or the second safety signal being in an invalid state, operation S3; and performing, in response to both the first safety signal and the second safety signal being in valid states, operation S4; S3, setting, by a delay module, a first enable signal to zero according to the first safety signal in the invalid state, and/or setting a safety status signal to zero according to the second safety signal in the invalid state; and controlling a relay driving module to turn off a relay; S4, outputting, by the delay module, a safety status signal in a valid state according to a second safety state in a valid state, and outputting a first enable signal and a second enable signal in valid states according to a control group signal or outputting a second enable signal in a valid state and a first enable signal in a valid state that lasts for a preset time according to the control group signal.

Beneficial effects of the above technical solutions are as follows.

The relay delay turn-off circuit and relay control method improve the control logic of the delay module by utilizing two control chips and two safety signals in the vehicle-mounted BMS. The two safety signals are output through self-check functions of the power control chip and the micro-control chip, enhancing the ability of the relay delay turn-off circuit to deal with single-point faults in the circuit.

### BRIEF DESCRIPTION OF THE DRAWINGS

The technical solutions and other beneficial effects of the present disclosure will be made apparent by describing in detail the specific embodiments of the present disclosure in conjunction with the accompanying drawings.
FIG. 1 is a schematic block diagram of a relay delay turn-off circuit according to a first embodiment of the present disclosure.
FIG. 2 is a schematic block diagram of a relay delay turn-off circuit according to a second embodiment of the present disclosure.
FIG. 3 is a schematic diagram of control chips outputting signals according to a third embodiment of the present disclosure.
FIG. 4 is a schematic circuit diagram of a delay module according to a third embodiment of the present disclosure.
FIG. 5 is a schematic circuit diagram of a relay driving module according to a third embodiment of the present disclosure.
FIG. 6 is a schematic flow chart of a relay control method according to some embodiments of the present disclosure.
FIG. 7 is a further schematic flow chart of a relay control method according to some embodiments of the present disclosure.
FIG. 8 is a schematic flow chart of a relay control method with delayed feedback according to some embodiments of the present disclosure.

### DETAILED DESCRIPTION

In order to make purposes, technical solutions, and beneficial effects of the present disclosure more obvious and easy to understand, the present disclosure will be described in further detail below with reference to the accompanying drawings and the specific embodiments. It should be understood that the specific embodiments described in the specification are only for explaining the present disclosure and are not intended to limit the present disclosure.

In the description of the present disclosure, the terms "first" and "second" are configured for descriptive purposes only and should not be construed as indicating or implying relative importance or implicitly indicating the number of the indicated technical features. Therefore, the features defined with "first" and "second" may explicitly or implicitly include one or more of the features. In the description of the present disclosure, the meaning of "a plurality of" refers to two or more, unless otherwise clearly and specifically defined. In addition, the terms "comprise", "include" and any variations thereof are intended to cover non-exclusive inclusion. For example, a process, method, system, product, or device that includes a series of steps or units is not necessarily limited to the steps or units explicitly listed, but may include other steps or units that are not explicitly listed or are inherent to the process, method, product, or device.

In the description of the present disclosure, it should be noted that, unless otherwise clearly specified and defined, the term "circuit" refers to a conductive loop composed of at least one element or sub-circuit through electrical connection or electromagnetic connection. When an element or circuit is "connected to" another element or an element/circuit is "connected between" two nodes, the element or circuit may be directly coupled or connected to another element or there may be an intermediate element. Connections between the elements may be physical, logical, or a combination of these. On the contrary, when an element is "directly coupled to" or "directly connected to" another element, it means that there is no intermediate element between the element and the other element. The term "coupling" should be understood in a broad sense, for example, it may be a fixed connection, a detachable connection, or an integral connection; it may be a mechanical connection, an electrical connection, a direct connection, or an indirect connection through an intermediate medium or an intermediate element, or it may be the internal connection of two elements or the interaction relationship between two elements. For those of ordinary skill in the art, the specific meanings of the above terms in the present disclosure may be understood according to the specific circumstances.

In a first aspect, embodiments of the present disclosure provide a relay delay turn-off circuit.

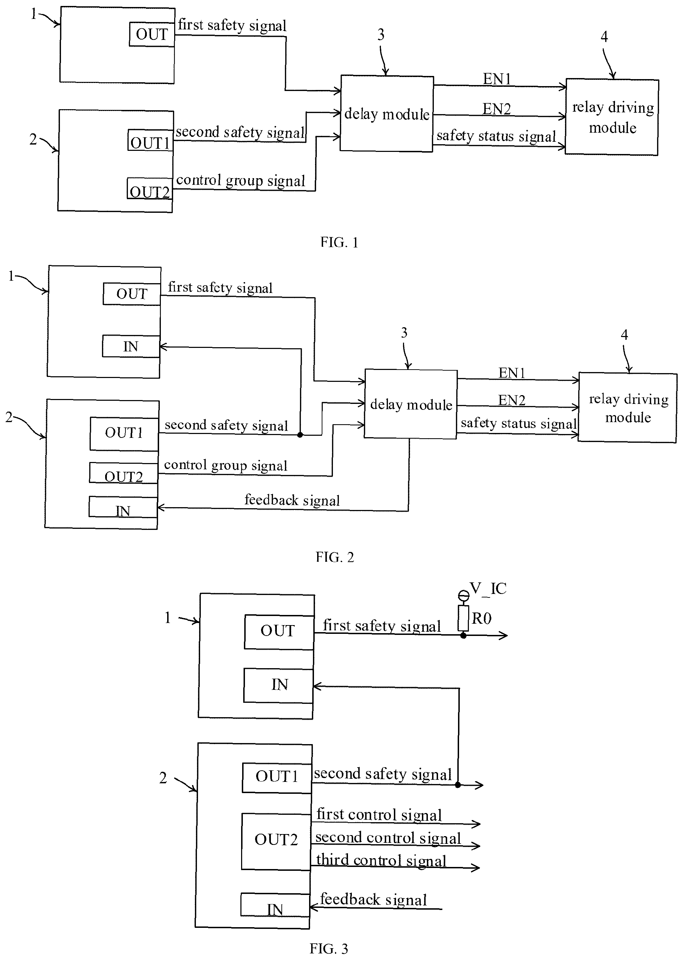

FIG. 1 is a schematic block diagram of a relay delay turn-off circuit according to a first embodiment of the present disclosure. As shown in FIG. 1, the relay delay turn-off circuit includes a power control chip 1, a micro-control chip 2, a delay module 3, and a relay driving module 4. An OUT port of the power control chip 1 outputs a first safety signal. An OUT1 port of the micro-control chip 2 outputs a second safety signal, and an OUT2 port of the micro-control chip 2 outputs a control group signal. The delay module 3 receives the first safety signal, the second safety signal, and the control group signal, and outputs a first enable signal EN1, a second enable signal EN2, and a safety status signal according to the first safety signal, the second safety signal, and the control group signal. The relay driving module 4 receives the first enable signal EN1, the second enable signal EN2, and the safety status signal, and drives a relay according to valid states of the first enable signal EN1, the second enable signal EN2, and the safety status signal.

In the embodiments of the present disclosure, a valid state of various signals is set to a logic high state, that is, an output signal is set to 1 to indicate that the signal is enabled and valid, or that a chip or module outputting the signal is in a safe and normal state. In a case where the output signal is set to zero, it indicates that the signal is disabled and invalid, or that the chip or module is in an unsafe and fault state. In the relay delay turn-off circuit, the valid state of the first enable signal EN1 indicates that the delay module 3 enables the relay driving module 4 to close the relay, the valid state of the second enable signal EN2 indicates that the micro-control chip 2 enables the relay driving module 4 to close the relay, and the safety status signal indicates that the micro-control chip 2 is in a normal working state.

In a vehicle-mounted BMS, when the control chip is subject to external environmental interference or an abnormal fault occurs, the output signals of all chip communication ports may be abnormal, and the chip needs to run a reset program internally. If the relay is controlled only by a single signal from a certain control chip, the relay may turn-off immediately during the chip reset process.However, in the relay delay turn-off circuit of the first embodiment, the first safety signal output by the power control chip 1 and the control group signal output by the micro-control chip 2 jointly control the delay module 3, delaying the turn-off action of the relay driving module 4 until after a preset time. The preset time is greater than a reset time of the micro-control chip 2. During the reset process of the micro-control chip 2, the relay will not turn-off immediately due to abnormal interference or short-term abnormal faults, thereby ensuring driving safety. In the embodiments, the power control chip 1 has a power-on fault self-check function. That is, when the system is powered on and started, a fault self-check program is first run inside the chip to prevent the vehicle relay from closing and operating when there is a potential fault in the control chip. After the fault self-check program is run, the power control chip 1 sets the first safety signal to zero according to the fault state, and the delay module 3 outputs the first enable signal set to zero EN1 according to the first safety signal set to zero, preventing the relay from starting when the power control chip 1 is faulty. The micro-control chip 2 also has a power-on fault self-check function and sets the second safety signal to zero according to the fault state. The delay module 3 outputs the safety status signal set to zero according to the second safety signal set to zero, preventing the relay from starting when the micro-control chip 2 is faulty. Therefore, vehicle safety is protected by the two safety signals from the two control chips during the power-on and start-up stage.

FIG. 2 is a schematic block diagram of a relay delay turn-off circuit according to a second embodiment of the present disclosure. As shown in FIG. 2, the power control chip 1 receives the second safety signal through an IN port of the power control chip 1, and outputs the first safety signal according to the second safety signal. In a case where the micro-control chip 2 faults, the second safety signal is set to zero. The power control chip 1 sets the first safety signal to zero according to the second safety signal set to zero. The delay module 3 outputs a feedback signal to an IN port of the micro-control chip 2. In a case where the delay module 3 faults or is abnormal, the micro-control chip 2 sets the second safety signal to zero according to the feedback signal, thereby controlling the delay module 3 to output the safety status signal set to zero. In the embodiments, a priority logic relationship is set between the first safety signal and the second safety signal. In a case where the micro-control chip faults or is abnormal, the power control chip, even if in a normal working state, still needs to set the first safety signal to an invalid state to turn-off the relay, preventing the disorder of control instructions output from the micro-control chip. Meanwhile, the feedback signal provided by the delay module may also monitor in real time whether the delay function is normal.

FIG. 3 is a schematic diagram of control chips outputting signals according to a third embodiment of the present disclosure. As shown in FIG. 3, in the embodiments, the control group signal output by the OUT2 port of the micro-control chip 2 includes a first control signal, a second control signal, and a third control signal. The power control chip 1 outputs the first safety signal and receives the second safety signal. The first safety signal is coupled to a resistor R0 and pulled up to a set-1 state, thereby setting a default state as a valid state.

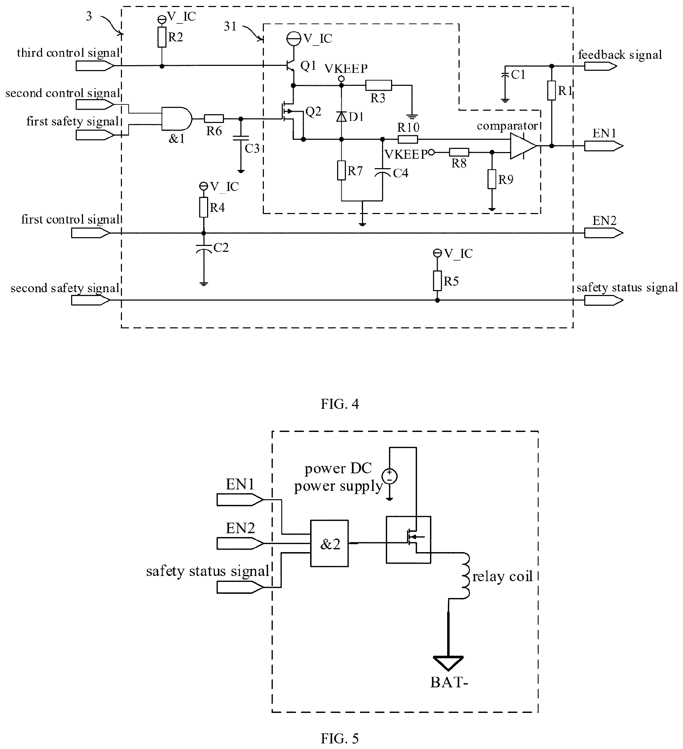

FIG. 4 is a schematic circuit diagram of a delay module according to a third embodiment of the present disclosure. As shown in FIG. 3 and FIG. 4, in a case where the power control chip 1 and the micro-control chip 2 perform a reset, the delay module 3 outputs the second enable signal EN2 according to the first control signal, outputs the first enable signal EN1 according to the first safety signal, the second control signal, and the third control signal, outputs the safety status signal according to the second safety signal, and outputs the feedback signal according to the first enable signal EN1. The third control signal is coupled to a resistor R2 and pulled up to set a default state as a set-1 state. The second safety signal is coupled to a resistor R5 and pulled up to set a default state as a set-1 state. The first control signal is coupled to a resistor R4 and a capacitor C2 for filtering and noise reduction, so as to improve the stability and reliability of the first control signal.

FIG. 5 is a schematic circuit diagram of a relay driving module according to a third embodiment of the present disclosure. As shown in FIG. 5, a relay coil is coupled between a power DC power supply and a battery negative electrode BAT-. An on-off state of a high-voltage circuit of the relay coil is controlled by a switching transistor, and a driving signal indicating enabled conduction is determined by the valid states of the first enable signal EN1, the second enable signal EN2, and the safety status signal. In this embodiment, as shown in FIG. 5, the first enable signal EN1, the second enable signal EN2, and the safety status signal implement the above-mentioned drive logic for enabled conduction through a three-input AND gate &2.

In the third embodiment, the valid state of the first control signal indicates that the micro-control chip 2 enables the second enable signal to be in a valid state. The valid states of the second control signal and the third control signal indicate that the delayed turn-off function of the delay module 3 is enabled.

In the third embodiment, the delay module 3 includes a delay circuit unit 31. The delay circuit unit 31 receives the first safety signal, the second control signal, and the third control signal, and outputs the first enable signal EN1. In a case where the first safety signal, the second control signal, and the third control signal are all in a valid state, that is, all set to 1, the first enable signal EN1 output by the delay circuit unit 31 remains in a valid state. In a case where the first safety signal is invalid, the delay circuit unit 31 controls the first enable signal EN1 to remain valid within the preset time.

The delay circuit unit 31 includes at least an excitation source, a first switch, a second switch, a delay capacitor, a delay resistor, a comparator, a first voltage-dividing resistor, and a second voltage-dividing resistor. The first switch is coupled between the excitation source and the second switch, and is controlled by the third control signal to control an on-off state of a path between the excitation source and the second switch. The second switch includes a first terminal, a second terminal, and a controlled terminal. The first terminal is coupled to the first switch. The second terminal is coupled to a non-inverting input terminal of the comparator. The controlled terminal receives the first safety signal and the second control signal, so that the second switch is controlled by the first safety signal and the second control signal. The delay capacitor and the delay resistor are connected in parallel. One end of the delay capacitor is coupled to the second terminal of the second switch, and the other end of the delay capacitor is grounded. An inverting input terminal of the comparator is coupled to a node between the first voltage-dividing resistor and the second voltage-dividing resistor, the other end of the first voltage-dividing resistor is coupled to the first terminal of the second switch, and the other end of the second voltage-dividing resistor is grounded.

In some embodiments, the delay circuit unit 31 further includes a diode and a discharge resistor. A positive terminal of the diode is coupled to the second terminal of the second switch. A negative terminal of the diode is coupled to the first terminal of the second switch. One end of the discharge resistor is coupled to the first terminal of the second switch, and the other end of the discharge resistor is grounded.

An implementation of the delay circuit unit 31 may refer to the specific structure of the delay circuit unit 31 in FIG. 4. The first switch is a triode Q1, the second switch is a MOS transistor Q2, the excitation source is a current source V_IC connected to a collector of the triode Q1, the delay capacitor is C4, the delay resistor is R7, the first voltage-dividing resistor is R8, and the second voltage-dividing resistor is R9. The third control signal is connected to a base of the triode Q1 to control the on-off state of the triode Q1. Since the third control signal is pulled up by the resistor R2, the triode Q1 is turned on by default. A drain of the MOS transistor Q2, i.e., the first terminal of the second switch, is coupled to an emitter of the triode Q1. A source of the MOS transistor Q2, i.e., the second terminal of the second switch, is coupled to the non-inverting input terminal of the comparator through a current-limiting resistor R10. A gate of the MOS transistor Q2 is the controlled terminal of the second switch. After the first safety signal and the second control signal pass through an AND gate &1, the first safety signal and the second control signal first pass through a filtering circuit composed of a resistor R6 and a capacitor C3, and then are transmitted to the gate of the MOS transistor Q2. A voltage at the drain of the MOS transistor Q2 is marked as a VKEEP signal. After the VKEEP signal is divided by the resistor R8 and the resistor R9, the VKEEP signal provides a reference voltage to the inverting input terminal of the comparator. An output signal of the comparator is the first enable signal EN1. In response to a voltage at the non-inverting input terminal is greater than a voltage at the inverting input terminal, the first enable signal EN1 is set to 1. In response to the voltage at the non-inverting input terminal is less than the voltage at the inverting input terminal, the first enable signal EN1 is set to zero. An output terminal of the comparator is coupled to one end of a resistor R1. The other end of the resistor R1 outputs the feedback signal and is coupled to a grounded capacitor C1. The diode D1 is arranged between the drain and the source of the MOS transistor Q2. The positive terminal of the diode D1 is connected to the source, and the negative terminal of the diode D1 is connected to the drain. The discharge resistor is a resistor R3.

In an application scenario of the vehicle relay, in a case where the micro-control chip 2 has a power-on fault, the second safety signal is set to zero, the safety status signal is set to an invalid state, the three-input AND gates &2 outputs a zero-set signal, and the relay coil is turned off.

In a case where the micro-control chip 2 is in a normal working state and the power control chip 1 faults or is abnormal, the first safety signal is set to zero and is in an invalid state, and a signal output by the AND gate &1 is set to zero to control the MOS transistor Q2 to be turned off. At this time, since the triode Q1 is turned on by default, the excitation source V_IC is output to the drain of the MOS transistor, the VKEEP signal maintains a high potential, and a the voltage at the source of the MOS transistor Q2 decreases, causing the comparator to output a zero-set signal, that is, the first enable signal EN1 is set to zero, and the relay is turned off.

In a case where the power control chip 1 and the micro-control chip 2 are both in normal working states, the first safety signal and the second safety signal are both in valid states. The micro-control chip 2 outputs the first control signal to control the second enable signal EN2, that is, the relay is controlled by the micro-control chip 2 according to an operation instruction of the driver. The micro-control chip 2 outputs the second control signal to control the on-off state of the MOS transistor Q2, and outputs the third control signal to control the on-off state of the path between the excitation source V_IC and the drain of the MOS transistor. In response to the second control signal and the third control signal being both in the valid states, a corresponding operation instruction is to close the relay. The triode Q1 is turned on, the excitation source V_IC is output to the drain of the MOS transistor Q2, the VKEEP signal maintains a high potential, and the delay function of the delay circuit unit 31 operates normally. In this case, in response to a reset event occurs in the micro-control 2 or the power control chip 1, an abnormal sleep instruction inside the power control chip 1 will set the first safety signal to zero, or the micro-control chip 2 will output an abnormal second safety signal to set the first safety signal to zero, thereby controlling the MOS transistor Q2 to be turned off. The capacitor C4 discharges through the resistor R7, and the voltage at the source of the MOS transistor Q2 decreases slowly, ensuring that the voltage at the non-phase input terminal of the comparator remains higher than the voltage at the inverting input terminal within the preset time. That is, the first enable signal EN1 may maintain a valid state within the preset time. The preset time may be adjusted by selecting parameters of the capacitor C4 and the resistor R7. Generally, the preset time is set to be greater than or equal to 2 seconds, or set to be greater than the reset time of the micro-control chip 2. In this embodiment, since the reference voltage of the comparator is set by dividing the VKEEP signal, the voltages of the non-inverting input terminal and the inverting input terminal are both related to the same excitation source V_IC. In a case where the excitation source V_IC is offset, the reference voltage will also be offset accordingly, ensuring that the delay circuit unit 31 will not cause a delay time offset due to voltage offset, thereby enhancing the safety and reliability of the system.

In a case where the micro-control chip 2 resumes normal operation after the reset, in order to improve the operation response speed as soon as possible, the micro-control chip 2 may pull down and set the second control signal and the third control signal to zero, turning off the triode Q1 and the MOS transistor Q2. At this time, the capacitor C4 is quickly discharged through the diode D1 and the resistor R3, and a voltage across the resistor R10 immediately drops to the reference voltage of the comparator. The comparator outputs a zero-set signal. In this way, the first enable signal EN1 is quickly set to zero, which increases the turn-off speed of the relay.

In a case where the delay circuit unit 31 faults, the voltage value or voltage duration of the feedback signal may become abnormal. The micro-control chip 2 receives the feedback signal and sets the second safety signal to zero according to the abnormal condition of the feedback signal, thereby preventing potential faults in the delay circuit unit 31 from affecting normal driving safety.

In a second aspect, the embodiments of the present disclosure provide a relay control method.

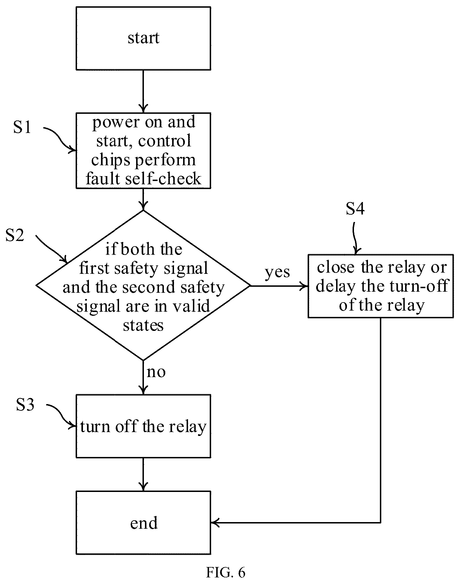

FIG. 6 is a schematic flow chart of a relay control method according to some embodiments of the present disclosure. As shown in FIG. 6, the method starts at block S1 and ends at block S3 or block S4. At block S1, the relay delay turn-off circuit is powered on and started, and the power control chip 1 and the micro-control chip 2 run the fault self-check program, and determine the valid states of the first safety signal and the second safety signal according to the fault states of the power control chip 1 and the micro-control chip 2 respectively. After block S1, an operation at block S2 is performed, and the operation at block S2 is a judgment operation. In response to the first safety signal being in an invalid state and/or the second safety signal being in an invalid state, an operation at block S3 is performed. In response to both the first safety signal and the second safety signal being in valid states, an operation at block S4 is performed. At block S3, the delay module 3 sets the first enable signal EN1 to zero according to the first safety signal in the invalid state, and/or sets the safety status signal to zero according to the second safety signal in the invalid state, and controls the relay driving module to turn off the relay. At block S4, the delay module 3 outputs a safety status signal in a valid state according to a second safety signal in a valid state, and outputs the first enable signal EN1 and the second enable signal EN2 in the valid states according to the control group signal, or outputs the second enable signal EN2 in the valid state and the first enable signal EN1 in the valid state that lasts for the preset time according to the control group signal, that is, closes the relay or delays the turn-off of the relay.

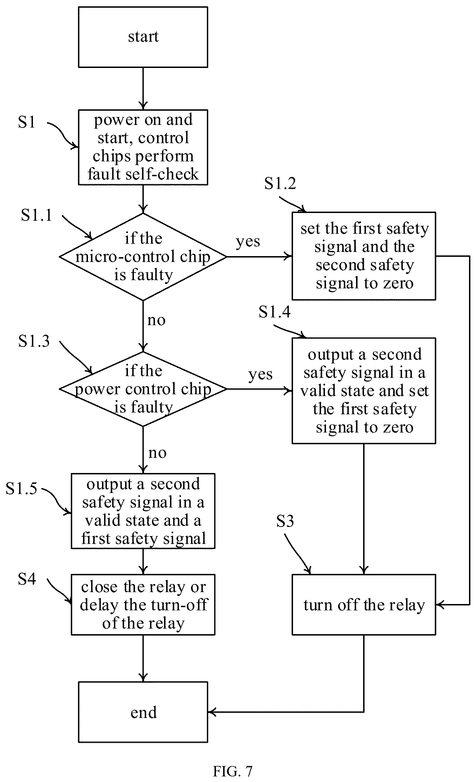

FIG. 7 is a further schematic flow chart of a relay control method according to some embodiments of the present disclosure. As shown in FIG. 7, the method starts at block S1, goes through block S1.1 to block S1.5, and ends at block S3 or block S4. An operation at block S1.1 is a judgment operation. At block S1.1, in response to the micro-control chip 2 being faulty, an operation at block S1.2 is performed, and in response to the micro-control chip 2 being not faulty, an operation at block S1.3 is performed. At block S1.2, the micro-control chip 2 outputs a second safety signal in an invalid state, and the power control chip 1 outputs a first safety signal in an invalid state after receiving the second safety signal in the invalid state. The operation at block S1.3 is a judgment operation. At block S1.3, in response to the power control chip 1 being faulty, an operation at block S1.4 is performed, and in response to the power control chip 1 being not faulty, an operation at block S1.5 is performed. At block S1.4, the micro-control chip 2 outputs a second safety signal in a valid state, and the power control chip 1 outputs a first safety signal in an invalid state. At block S1.5, the micro-control chip 2 outputs a second safety signal in a valid state, and the power control chip 1 outputs a first safety signal in a valid state after receiving the second safety signal in the valid state. After block S1.2 and block S1.4 are completed, the operation at block S3 is performed and the process ends. After step 1.5 is completed, the operation at block S4 is performed and the process ends.

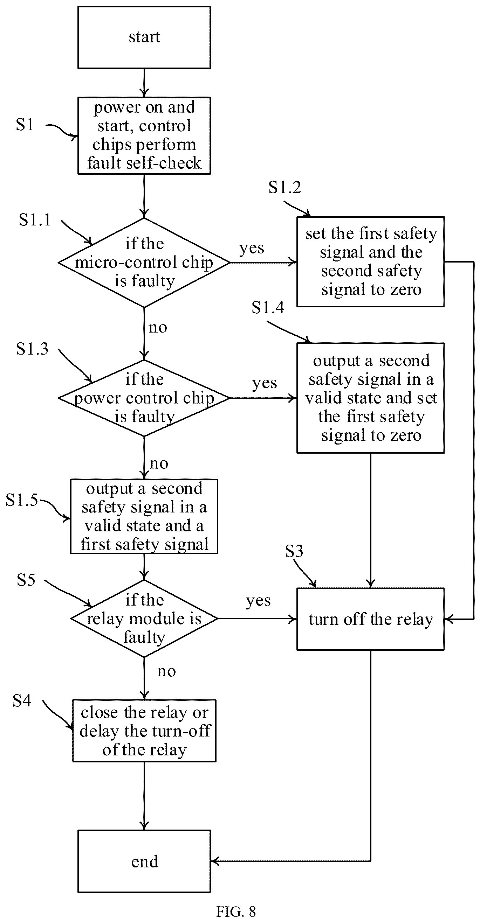

FIG. 8 is a schematic flow chart of a relay control method with delayed feedback according to some embodiments of the present disclosure. As shown in FIG. 8, the method starts at block S1, goes through block S1.1 to block S1.5, and ends at block S3 or performs the operation at block S5. At block S5, in response to the delay circuit unit 31 in the delay module 3 being abnormal, the operation at block S3 is performed, and in response to the delay circuit unit 31 in the delay module 3 being normal, the operation at block S4 is performed.

The descriptions provided in the above blocks are only intended to help understand the method, structure, and core idea of the present disclosure. For those of ordinary skill in the technical field, without departing from the principles of the present disclosure, several improvements and modifications may be made to the present disclosure, and these improvements and modifications also fall within the protection scope of the claims of the present disclosure.

## Claims

1. A relay delay turn-off circuit, comprising:
a power control chip (1), a micro-control chip (2), a delay module (3), and a relay driving module (4);
wherein the power control chip (1) is configured to output a first safety signal;
the micro-control chip (2) is configured to output a second safety signal and a control group signal;
the delay module (3) is configured to receive the first safety signal, the second safety signal, and the control group signal, and to output a first enable signal (EN1), a second enable signal (EN2), and a safety status signal according to the first safety signal, the second safety signal, and the control group signal;
the relay driving module (4) is configured to receive the first enable signal (EN1), the second enable signal (EN2), and the safety status signal, and to drive a relay according to valid states of the first enable signal (EN1), the second enable signal (EN2), and the safety status signal;
wherein in a case where the micro-control chip (2) is reset, the delay module (3) is configured to delay a turn-off action of the relay driving module (4) until after a preset time via the first enable signal (EN1), and the preset time is greater than a reset time of the micro-control chip (2);
in a case where the power control chip (1) faults or is abnormal, the first safety signal is set to zero, and the delay module (3) is configured to output the first enable signal (EN1) set to zero according to the first safety signal set to zero;
in a case where the micro-control chip (2) faults or is abnormal, the second safety signal is set to zero, and the delay module (3) is configured to output the safety status signal set to zero according to the second safety signal set to zero.

2. The relay delay turn-off circuit as claimed in claim 1, wherein
the control group signal comprises a first control signal, a second control signal, and a third control signal;
the delay module (3) is configured to output the safety status signal according to the second safety signal, to output the second enable signal (EN2) according to the first control signal, and to output the first enable signal (EN1) according to the first safety signal, the second control signal, and the third control signal.

3. The relay delay turn-off circuit as claimed in claim 2, wherein
the first safety signal, the second safety signal, the first control signal, and the third control signal are all set to a default valid state through a pull-up resistor respectively.

4. The relay delay turn-off circuit as claimed in claim 1, wherein
the power control chip (1) is further configured to receive the second safety signal and output the first safety signal according to the second safety signal, so as to set the first safety signal to zero in a case where the micro-control chip (2) faults.

5. The relay delay turn-off circuit as claimed in claim 1, wherein
the delay module (3) is further configured to output a feedback signal according to the first enable signal (EN1);
the micro-control chip (2) is configured to receive the feedback signal and output the second safety signal according to the feedback signal;
in a case where the delay module (3) faults or is abnormal, the micro-control chip (2) is configured to set the second safety signal to zero.

6. The relay delay turn-off circuit as claimed in claim 2, wherein
the delay module (3) comprises a delay circuit unit (31);
the delay circuit unit (31) is configured to receive the first safety signal, the second control signal, and the third control signal, and to output the first enable signal (EN1);
in a case where the first safety signal is invalid, the first enable signal (EN1) remains valid within the preset time.

7. The relay delay turn-off circuit as claimed in claim 6, wherein
the delay circuit unit (31) comprises at least an excitation source (V_IC), a first switch (Q1), a second switch (Q2), a delay capacitor (C4), a delay resistor (R7), a comparator, a first voltage-dividing resistor (R8), and a second voltage-dividing resistor (R9);
the first switch (Q1) is coupled between the excitation source (V_IC) and the second switch (Q2), and is controlled by the third control signal to control an on-off state of a path between the excitation source (V_IC) and the second switch (Q2);
the second switch (Q2) comprises a first terminal, a second terminal, and a controlled terminal, the first terminal is coupled to the first switch (Q1), the second terminal is coupled to a non-inverting input terminal of the comparator, and the controlled terminal is configured to receive the first safety signal and the second control signal, so that the second switch (Q2) is controlled by the first safety signal and the second control signal;
the delay capacitor (C4) and the delay resistor (R7) are connected in parallel, one end of the delay capacitor (C4) is coupled to the second terminal of the second switch (Q2), and the other end of the delay capacitor (C4) is grounded;
an inverting input terminal of the comparator is coupled to a node between the first voltage-dividing resistor (R8) and the second voltage-dividing resistor (R9), the other end of the first voltage-dividing resistor (R8) is coupled to the first terminal of the second switch (Q2), and the other end of the second voltage-dividing resistor (R9) is grounded.

8. The relay delay turn-off circuit as claimed in claim 7, wherein
the delay circuit unit (31) further comprises a diode (D1) and a discharge resistor (R3), a positive terminal of the diode (D1) is coupled to the second terminal of the second switch (Q2), a negative terminal of the diode (D1) is coupled to the first terminal of the second switch (Q2), one end of the discharge resistor (R3) is coupled to the first terminal of the second switch (Q2), and the other end of the discharge resistor (R3) is grounded.

9. The relay delay turn-off circuit as claimed in claim 7, wherein
the delay module (3) further comprises an AND gate (&1) and a filtering circuit, the AND gate (&1) is configured to receive the first safety signal and the second control signal, the filtering circuit is coupled between the AND gate (&1) and the controlled terminal of the second switch (Q2).

10. The relay delay turn-off circuit as claimed in claim 7, wherein
the delay module (3) further comprises a resistor (R1) and a grounded capacitor (C1), an output terminal of the comparator is coupled to one end of the resistor (R1), and the other end of the resistor (R1) outputs a feedback signal and is coupled to the grounded capacitor (C1).

11. The relay delay turn-off circuit as claimed in claim 7, wherein
the relay driving module (4) comprises a relay coil, a power DC power supply, a battery negative electrode (BAT-), a switching transistor, and a three-input AND gate (&2), the relay coil is coupled between the battery negative electrode (BAT-) and the switching transistor, the switching transistor is further coupled to the power DC power supply and the three-input AND gate (&2), and the three-input AND gate (&2) is configured to receive the first enable signal (EN1), the second enable signal (EN2), and the safety status signal.

12. The relay delay turn-off circuit as claimed in claim 1, wherein
the relay delay turn-off circuit is configured in a vehicle.

13. A relay control method, comprising:
S1, powering on and starting a relay delay turn-off circuit as claimed in any one of claims 1 to 12, wherein a power control chip (1) and a micro-control chip (2) run a fault self-check program, and determine valid states of a first safety signal and a second safety signal according to fault states of the power control chip (1) and the micro-control chip (2) respectively;
S2, performing, in response to the first safety signal being in an invalid state and/or the second safety signal being in an invalid state, operation S3; and performing, in response to both the first safety signal and the second safety signal being in valid states, operation S4;
S3, setting, by a delay module (3), a first enable signal (EN1) to zero according to the first safety signal in the invalid state, and/or setting a safety status signal to zero according to the second safety signal in the invalid state; and controlling a relay driving module (4) to turn off a relay;
S4, outputting, by the delay module (3), a safety status signal in a valid state according to the second safety signal in the valid state, and outputting a first enable signal (EN1) and a second enable signal (EN2) in valid states according to a control group signal or outputting a second enable signal (EN2) in a valid state and a first enable signal (EN1) in a valid state that lasts for a preset time according to the control group signal.

14. The relay control method as claimed in claim 13, wherein the S1 further comprises:
S1.1, performing, in response to the micro-control chip (2) being faulty, operation S1.2; and performing, in response to the micro-control chip (2) being not faulty, operation S1.3;
S1.2, outputting, by the micro-control chip (2), a second safety signal in an invalid state, and outputting, by the power control chip (1), a first safety signal in an invalid state after receiving the second safety signal in the invalid state;
S1.3, performing, in response to the power control chip (1) being faulty, operation S1.4; and performing, in response to the power control chip (1) being not faulty, operation S1.5;
S1.4, outputting, by the micro-control chip (2), a second safety signal in a valid state, and outputting, by the power control chip (1), a first safety signal in an invalid state;
S1.5, outputting, by the micro-control chip (2), a second safety signal in a valid state, and outputting, by the power control chip (1), a first safety signal in a valid state after receiving the second safety signal in the valid state.

15. The relay control method as claimed in claim 13 or 14, further comprising:
S5, performing, in response to a delay circuit unit (31) in the delay module (3) being abnormal, operation S3; and performing, in response to the delay circuit unit (31) in the delay module (3) being normal, operation S4.
